(19) Europäisches Patentamt
European Patent Office
Office européen des brevets

(11) EP 4 667 526 A1

(12) EUROPEAN PATENT APPLICATION
published in accordance with Art. 153(4) EPC

(43) Date of publication:
24.12.2025 Bulletin 2025/52

(21) Application number: 24901123.0

(22) Date of filing: 06.12.2024

(51) International Patent Classification (IPC):
*C08L 67/02* (2006.01) *C08L 3/02* (2006.01)
*C08G 63/91* (2006.01) *C08J 5/18* (2006.01)

(52) Cooperative Patent Classification (CPC):
C08G 63/91; C08J 5/18; C08L 3/02; C08L 67/02

(86) International application number:
PCT/KR2024/019935

(87) International publication number:
WO 2025/121937 (12.06.2025 Gazette 2025/24)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 08.12.2023 KR 20230177651
05.12.2024 KR 20240179460

(71) Applicant: LG Chem, Ltd.
Seoul 07336 (KR)

(72) Inventors:
- JE, Hwaheon
Daejeon 34122 (KR)
- SHIM, Hong Shik
Daejeon 34122 (KR)
- PARK, Hyunwoo
Daejeon 34122 (KR)
- MOON, Jungmi
Daejeon 34122 (KR)
- KIM, Hyunju
Daejeon 34122 (KR)
- YUN, Haesung
Daejeon 34122 (KR)
- JUNG, Jin Young
Daejeon 34122 (KR)

(74) Representative: Goddar, Heinz J.
Boehmert & Boehmert
Anwaltspartnerschaft mbB
Pettenkoferstrasse 22
80336 München (DE)

# (54) BIODEGRADABLE COMPOSITION AND BIODEGRADABLE FILM

(57) The present invention provides a biodegradable composition and a biodegradable film comprising polybutylene adipate terephthalate and thermoplastic starch, having a predetermined non-recoverable area.

EP 4 667 526 A1

## Description

### TITLE OF THE INVENTION

BIODEGRADABLE COMPOSITIOM AND BIODEGRADABLE FILM

### FIELD OF THE INVENTION

CROSS-REFERENCE TO RELATED APPLICATION(S)

The present application is based on, and claims priority from, Korean Patent Application No. 10-2023-0177651, filed on December 8, 2023, and Korean Patent Application No. 10-2024-0179460, filed on December 5, 2024, respectively, the disclosures of which are hereby incorporated by reference herein in their entirety.

The present invention relates to a biodegradable composition and a biodegradable film.

### BACKGROUND OF THE INVENTION

With the recent surge in interest in environmental protection and eco-friendliness, there is an increasing need for methods of cultivating eco-friendly agricultural products. One such eco-friendly agricultural method is known as mulching, where the soil surface is covered with a mulching film during crop cultivation. This prevents the growth of weeds, protects against pests, maintains soil moisture, regulates soil temperature, prevents soil erosion due to rainwater, and reduces pesticide use.

Although mulching films greatly contribute to the productivity of agricultural products, they pose challenges in terms of collection and recycling after use. Typically, synthetic resins such as polypropylene and polyethylene are used, with biodegradable components added as additives to impart biodegradability. However, the synthetic resin itself is not biodegradable. Additionally, any non-biodegradable synthetic resin left behind poses a risk of soil contamination.

Attempts have been made to manufacture mulching films using polybutylene adipate terephthalate (PBAT), a biodegradable plastic. However, while PBAT exhibits high elongation, its mechanical properties, such as Young's modulus, are inferior compared to traditional films like polyethylene. Furthermore, PBAT is a 100% petroleum-based material, resulting in a low bio-based content.

Efforts have been made to enhance the properties of polybutylene adipate terephthalate (PBAT) by compounding it with various biodegradable materials and increasing the bio-based content. However, the compatibility between polybutylene adipate terephthalate and other biodegradable materials is low, leading to reduced tensile properties.

### SUMMARY OF THE INVENTION

### TECHNICAL PROBLEM

The present invention aims to provide a biodegradable composition with excellent biodegradability, compatibility, and thermal diffusivity, as well as a biodegradable film manufactured from this composition that exhibits superior biodegradability and mechanical properties such as tensile strength, along with an increased content of bio-based materials.

### TECHNICAL SOLUTION

According to one embodiment of the present invention, a biodegradable composition is provided, which includes polybutylene adipate terephthalate and thermoplastic starch, and a non-recoverable area according to Formula 1 of the biodegradable composition is 1,000 or more 10,000 or less.

Additionally, according to another embodiment of the present invention, a biodegradable film is provided, which includes a biodegradable composition comprising polybutylene adipate terephthalate and thermoplastic starch, and a non-recoverable area according to Formula 1 of the biodegradable film is 1,000 or more 10,000 or less.

The biodegradable composition and biodegradable film according to specific embodiments of the invention will be described in more detail below.

Throughout this specification, unless otherwise specified, the terms "comprising" or "including" refer to the inclusion of any component (or element) without limitation, and should not be interpreted as excluding the addition of other components (or elements).

Furthermore, unless otherwise stated in this specification, the weight average molecular weight of polybutylene adipate terephthalate or polybutylene adipate terephthalate with maleic acid ester-bonded to the terminal hydroxyl group

can be measured using gel permeation chromatography (GPC). Specifically, the prepolymer or copolymer is dissolved in chloroform at a concentration of 2 mg/ml, and 20 μL is injected into the GPC, which is conducted at 40 °C. The mobile phase for the GPC is chloroform, with a flow rate of 1.0 mL/min, using two Agilent Mixed-B columns connected in series, and an RI Detector is used for detection. The Mw value is derived using a calibration curve formed with polystyrene standard samples. Nine types of polystyrene standard samples with weight average molecular weights of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol were used.

To prepare a composition for manufacturing biodegradable films, polybutylene adipate terephthalate can be compounded with other biodegradable materials, such as thermoplastic starch. However, since polybutylene adipate terephthalate is hydrophobic while thermoplastic starch is hydrophilic, they do not mix well, leading to decreased compatibility.

In response, the inventors have discovered that when the non-recoverable area of the biodegradable composition is 1,000 or more 10,000 or less according to Formula 1, the compatibility is improved, resulting in enhanced mechanical properties, such as tensile strength, of the biodegradable film manufactured from such compositions.

[Formula 1]

$$\text{Non-recoverable area} = A - B$$

In Formula 1,

A is the area of the storage modulus measured after increasing the strain on the biodegradable composition from 0.01% to 75% at a temperature of 150 °C and a frequency of 1 Hz, and
B is the area of the storage modulus measured after reducing the strain on the biodegradable composition back to 0.01%.

The non-recoverable area can be, for example, 2,000 or more, 5,000 or more, 10,000 or more, 15,000 or more, 20,000 or more, 25,000 or more, 30,000 or more, 35,000 or more, and 9,500 or less, 9,000 or less, 8,500 or less, 8,000 or less, 7,500 or less, 7,000 or less, 6,500 or less.

The non-recoverable area is a factor related to the degree of recovery of the composition when the strain is increased and then decreased, and the area of the storage modulus refers to the area under the line graph with strain on the x-axis and storage modulus on the y-axis. The more the non-recoverable area satisfies the above range, the better the distribution of the dispersed phase in the continuous phase included in the composition, which can lead to excellent compatibility. The non-recoverable area can be controlled by the composition of the biodegradable composition, the type of compatibilizer, particularly the inclusion of 'polybutylene adipate terephthalate with maleic acid ester-bonded to the terminal hydroxyl group,' its content, or the content of maleic anhydride contained therein, but is not limited thereto.

Meanwhile, if the non-recoverable area has an excessively high value, the compatibility of the biodegradable composition may decrease, and if the non-recoverable area has an excessively low value, the thermal diffusivity may decrease, resulting in inferior moldability and/or processability and increased process operation costs. In the process of manufacturing a film by reactive extrusion of the biodegradable composition, the compound discharged from the extruder is cooled by passing through a cooling water tank and then cut (pelletized). If the thermal diffusivity is low, the cooling speed of the compound discharged from the extruder is slow, making cutting difficult. Consequently, moldability and/or processability may deteriorate, or additional cooling equipment may be required, increasing process operation costs.

In one embodiment, the biodegradable composition may further comprise polybutylene adipate terephthalate with maleic acid ester-bonded to the terminal hydroxyl group. When the biodegradable composition includes "polybutylene adipate terephthalate with maleic acid ester-bonded to the terminal hydroxyl group," the compatibility between the resin material polybutylene adipate terephthalate and thermoplastic starch can be improved. Additionally, as the content of thermoplastic starch in the biodegradable composition increases, the cost becomes more economical, biodegradability is enhanced, and the content of bio-based carbon increases. By using "polybutylene adipate terephthalate with maleic acid ester-bonded to the terminal hydroxyl group" as a compatibilizer in the biodegradable composition, it is possible to include a large amount of thermoplastic starch and achieve the aforementioned effects. Furthermore, "polybutylene adipate terephthalate with maleic acid ester-bonded to the terminal hydroxyl group" can act as a chain extender, increasing the molecular weight, enhancing melt viscosity, and improving formability such as elongation.

The "polybutylene adipate terephthalate with maleic acid ester-bonded to the terminal hydroxyl group" can be prepared by esterification of maleic acid with the terminal hydroxyl group of polybutylene adipate terephthalate. For example, the polybutylene adipate terephthalate with maleic acid ester-bonded to the terminal hydroxyl group can be

represented by the following Chemical Formula 1 or 2.

[Chemical Formula 1]

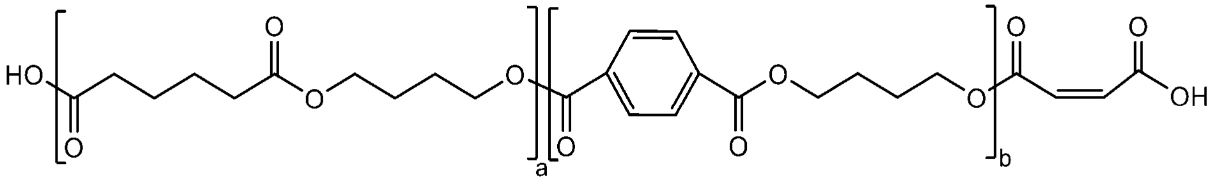

[Chemical Formula 2]

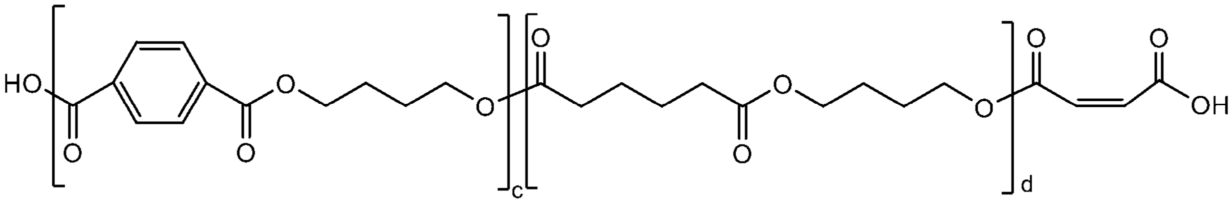

In Chemical Formulas 1 and 2,
a to d may each independently be an integer ranging from 1 to 500, 5 to 450, 10 to 400, or 20 to 300.

The "polybutylene adipate terephthalate with maleic acid ester-bonded to the terminal hydroxyl group" represented by Chemical Formula 1 may be formed by the ester reaction of one carboxyl group of maleic acid with the terminal hydroxyl group of polybutylene adipate terephthalate. Additionally, the "polybutylene adipate terephthalate with maleic acid ester-bonded to the terminal hydroxyl group" represented by Chemical Formula 2 may be formed by the ester reaction of each of the two carboxyl groups of maleic acid with different terminal hydroxyl groups of polybutylene adipate terephthalate.

The polybutylene adipate terephthalate with maleic acid ester-bonded to the terminal hydroxyl group can be prepared by ester reacting maleic acid and polybutylene adipate terephthalate as described above. By adjusting the content of maleic acid, the content of polybutylene adipate terephthalate, reaction temperature, reaction time, type and content of additives, the polybutylene adipate terephthalate with maleic acid ester-bonded to the terminal hydroxyl group can be manufactured, and the weight average molecular weight, structure, and viscosity of such polybutylene adipate terephthalate can be controlled.

Meanwhile, conventionally, there were cases where a compatibilizer with maleic anhydride grafted onto polybutylene adipate terephthalate was used. However, the grafting reaction efficiency is low due to the difficulty of radical formation in the middle of the polybutylene adipate terephthalate chain or due to steric hindrance. In contrast, the polybutylene adipate terephthalate with maleic acid ester-bonded to the terminal hydroxyl group has the advantage of significantly higher reaction efficiency.

Furthermore, when using a "compatibilizer with maleic anhydride grafted onto polybutylene adipate terephthalate" instead of "polybutylene adipate terephthalate with maleic acid ester-bonded to the terminal hydroxyl group" in the biodegradable composition and biodegradable film, additional process operations and long process operation times are required to produce the low-efficiency compatibilizer, leading to higher manufacturing costs. Moreover, due to the need to use highly toxic radical initiators, there are issues concerning environmental safety that must be carefully managed during work.

The polybutylene adipate terephthalate with maleic acid ester-bonded to the terminal hydroxyl group may have a weight-average molecular weight of 50,000 or more 200,000 or less, 70,000 or more 190,000 or less, 90,000 or more 180,000 or less, 100,000 or more 170,000 or less, or 120,000 or more 160,000 or less. If the weight-average molecular weight of the polybutylene adipate terephthalate with maleic acid ester-bonded to the terminal hydroxyl group does not satisfy the aforementioned range, the compatibility improvement effect may not appear, and the mechanical properties such as tensile strength of the film manufactured from the composition may deteriorate.

Additionally, it is preferable that the weight-average molecular weight of the polybutylene adipate terephthalate with maleic acid ester-bonded to the terminal hydroxyl group is smaller than that of the polybutylene adipate terephthalate included in the biodegradable composition. For example, the weight-average molecular weight of the polybutylene adipate terephthalate with maleic acid ester-bonded to the terminal hydroxyl group may be 0.9 times or less relative to the weight-average molecular weight of the polybutylene adipate terephthalate. For example, the weight-average molecular weight of the polybutylene adipate terephthalate with maleic acid ester-bonded to the terminal hydroxyl group may be 0.4 times or

more 0.8 times or less, 0.5 times or more 0.7 times or less, or 0.5 times or more 0.6 times or less that of the polybutylene adipate terephthalate.

Furthermore, when manufacturing a film by reactive extrusion of the biodegradable composition, it is preferable that the polybutylene adipate terephthalate with maleic acid ester-bonded to the terminal hydroxyl group has a lower viscosity compared to other components, such as polybutylene adipate terephthalate and thermoplastic starch, at the processing temperature. If the compatibilizer, polybutylene adipate terephthalate with maleic acid ester-bonded to the hydroxyl group at the terminal, has a lower viscosity than other components, it exhibits excellent flowability during extrusion, thereby being well distributed at the interface between polybutylene adipate terephthalate and thermoplastic starch, enhancing compatibility.

For example, the viscosity of the polybutylene adipate terephthalate with maleic acid ester-bonded to the terminal hydroxyl group may be 1,000 Pa.s or more 5,000 Pa.s or less at a temperature of 120 °C to 180 °C, 130 °C to 170 °C, 140 °C to 160 °C, or 150 °C. For instance, the viscosity may be 1,300 Pa.s or more, 1,600 Pa.s or more, 1,800 Pa.s or more, 2,000 Pa.s or more, 2,100 Pa.s or more, 2,200 Pa.s or more, and 4,800 Pa.s or less, 4,600 Pa.s or less, 4,400 Pa.s or less.

If the viscosity of the polybutylene adipate terephthalate with maleic acid ester-bonded to the terminal hydroxyl group is excessively high, the compatibility improvement effect may not appear, resulting in a deterioration of mechanical properties such as tensile strength of the film manufactured from the composition. Conversely, if the viscosity is excessively low, the thermal diffusivity of the biodegradable composition decreases, resulting in inferior moldability and/or processability, and increasing process operating costs.

Moreover, the polybutylene adipate terephthalate with maleic acid ester-bonded to the terminal hydroxyl group may include maleic acid in an amount of 2.0% by weight or more 5.0% by weight or less relative to 100% by weight of the polybutylene adipate terephthalate included in the polybutylene adipate terephthalate with maleic acid ester-bonded to the terminal hydroxyl group. For example, it may include 2.2% by weight or more, 2.4% by weight or more, 2.5% by weight or more, 2.7% by weight or more, 2.9% by weight or more, 3.0% by weight or more, and 4.8% by weight or less, 4.6% by weight or less, 4.5% by weight or less, 4.3% by weight or less, 4.1% by weight or less, 4.0% by weight or less.

If the maleic acid content in the polybutylene adipate terephthalate with maleic acid ester-bonded to the terminal hydroxyl group is too low, the compatibility of the biodegradable composition may decrease. Conversely, if the maleic acid content is too high, the thermal diffusivity of the biodegradable composition decreases, resulting in inferior moldability and/or processability, and increasing process operating costs.

In the biodegradable composition according to the embodiment, the polybutylene adipate terephthalate with maleic acid ester-bonded to the terminal hydroxyl group may be included in an amount of 1.5% by weight or more 15.0% by weight or less relative to the total 100% by weight of the polybutylene adipate terephthalate and thermoplastic starch. For example, it may be included in an amount of 1.7% by weight or more, 1.9% by weight or more, 2.0% by weight or more, 2.5% by weight or more, 3.0% by weight or more, 3.5% by weight or more, 4.0% by weight or more, and 13.0% by weight or less, 12.0% by weight or less, 11.0% by weight or less, 10.0% by weight or less, 9.0% by weight or less, 7.0% by weight or less, 6.0% by weight or less, 5.0% by weight or less. If the polybutylene adipate terephthalate with maleic acid ester-bonded to the terminal hydroxyl group is included in too small an amount, the compatibility improvement effect may not appear, resulting in a deterioration of mechanical properties such as tensile strength and elongation at break of the film manufactured from the composition. Conversely, if it is included in too large an amount, the melt viscosity may become excessively high, degrading moldability and increasing the cost of manufacturing the composition or film. Additionally, the acid value of the composition may increase due to the increased content of PBAT containing maleic acid, reducing the lifespan of the film manufactured from it.

In the biodegradable composition according to one embodiment, the polybutylene adipate terephthalate with maleic acid ester-bonded to the terminal hydroxyl group may be included in an amount of 0.5% by weight or more 10.0% by weight or less based on the total 100% by weight of the solid content of the biodegradable composition. For example, the polybutylene adipate terephthalate with maleic acid ester-bonded to the terminal hydroxyl group may be included in an amount of 1.0% by weight or more, 1.3% by weight or more, 1.5% by weight or more, 1.8% by weight or more, 1.9% by weight or more, 2.0% by weight or more, and may be included in an amount of 9.0% by weight or less, 7.0% by weight or less, 6.0% by weight or less, 5.0% by weight or less.

The biodegradable composition according to one embodiment may include polybutylene adipate terephthalate (PBAT) as a biodegradable resin. The polybutylene adipate terephthalate may be included in an amount of 30% by weight or more 80% by weight or less based on the total 100% by weight of the solid content of the biodegradable composition, and more specifically, in an amount of 30% by weight or more, 35% by weight or more, 40% by weight or more, and in an amount of 80% by weight or less, 75% by weight or less, 70% by weight or less. If the polybutylene adipate terephthalate is included in the biodegradable composition in an excessively small amount, the elongation of the film produced therefrom may decrease, and if the polybutylene adipate terephthalate is included in an excessively large amount, the tensile properties such as Young's modulus and yield tensile strength of the film produced therefrom may deteriorate.

Furthermore, the biodegradable composition may include thermoplastic starch to enhance the processability of polybutylene adipate terephthalate and to accelerate the biodegradation rate. The thermoplastic starch is a starch that has

been endowed with thermoplasticity, which allows it to change shape freely without charring at temperatures above a certain level, similar to conventional general-purpose resins such as polyethylene, polystyrene, and polypropylene, by adding a plasticizer to the natural polymer starch.

The thermoplastic starch may include one or more selected from the group consisting of rice starch, wheat starch, corn starch, sweet potato starch, potato starch, tapioca starch, cassava starch, and their modified starches.

Additionally, the plasticizer included in the natural polymer starch may be one or more selected from the group consisting of isosorbide, glycerol, sorbitol, fructose, formamide, xylitol, corn oil, and edible oil. The plasticizer may be included in an amount of 5% by weight or more 50% by weight or less, 10% by weight or more 45% by weight or less, or 15% by weight or more 35% by weight or less based on the total 100% by weight of the thermoplastic starch.

The biodegradable composition according to one embodiment may include the thermoplastic starch in an amount of 10% by weight or more 50% by weight or less based on the total 100% by weight of the solid content of the biodegradable composition. For example, the thermoplastic starch may be included in an amount of 10% by weight or more, 15% by weight or more, 20% by weight or more, 25% by weight or more, and in an amount of 45% by weight or less, 40% by weight or less, or 35% by weight or less based on the total 100% by weight of the solid content of the biodegradable composition. As the content of thermoplastic starch in the biodegradable composition increases, the cost becomes more economical, biodegradability improves, and the content of bio-based carbon can increase. However, if the thermoplastic starch is included in the biodegradable composition in an excessively large amount, the elongation of the film produced therefrom may decrease, and if the thermoplastic starch is included in an excessively small amount, the biodegradation rate may slow down and the tensile properties such as Young's modulus and yield tensile strength of the film produced therefrom may deteriorate.

The biodegradable composition according to one embodiment may include hydrophobic polybutylene adipate terephthalate and hydrophilic thermoplastic starch, and the compatibility between them can be considered improved when the dispersed phase of thermoplastic starch is densely and uniformly distributed within the polybutylene adipate terephthalate matrix. Additionally, compatibility is considered improved when the adhesion at the interface between polybutylene adipate terephthalate and thermoplastic starch is strong. In other words, the more densely and uniformly the dispersed phase of thermoplastic starch is distributed within the polybutylene adipate terephthalate matrix, the better the compatibility, and the stronger the adhesion at the interface between polybutylene adipate terephthalate and thermoplastic starch, the better the compatibility.

Moreover, whether compatibility is improved can be numerically confirmed through analysis using a Dynamic Mechanical Analyzer (DMA). For instance, by measuring the glass transition temperature (Tg) of thermoplastic starch and polybutylene adipate terephthalate using a DMA, one can confirm whether compatibility is improved.

Specifically, the more densely and uniformly the dispersed phase of thermoplastic starch is distributed within the polybutylene adipate terephthalate matrix, the lower the glass transition temperature (Tg) of thermoplastic starch becomes, and this can be analyzed using a Dynamic Mechanical Analyzer to confirm whether compatibility is improved. Furthermore, the stronger the adhesion at the interface between polybutylene adipate terephthalate and thermoplastic starch, the more effectively the dispersed phase of thermoplastic starch transfers stress to polybutylene adipate terephthalate, increasing the glass transition temperature (Tg) of polybutylene adipate terephthalate, particularly the glass transition temperature (Tg) of the butylene-adipate repeating unit, which is the soft segment. This can be analyzed using a Dynamic Mechanical Analyzer to confirm whether compatibility is improved.

Therefore, the better the compatibility between polybutylene adipate terephthalate and thermoplastic starch, the more the glass transition temperature (Tg) of thermoplastic starch decreases. For example, the glass transition temperature (Tg) of thermoplastic starch may be 10 °C or more 140 °C or less, 15 °C or more 120 °C or less, 20 °C or more 100 °C or less, 25 °C or more 80 °C or less, 25 °C or more 50 °C or less, or 25 °C or more 40 °C or less.

Additionally, the better the compatibility between polybutylene adipate terephthalate and thermoplastic starch, the more the glass transition temperature (Tg) of polybutylene adipate terephthalate increases. For example, the glass transition temperature (Tg) of polybutylene adipate terephthalate may be -23.0 °C or more -10.0 °C or less, or -22.5 °C or more -15.0 °C or less.

Furthermore, the absolute value of the difference in the glass transition temperature (Tg) between the thermoplastic starch and polybutylene adipate terephthalate may be 20 °C or more 70 °C or less, 25 °C or more 65 °C or less, 30 °C or more 60 °C or less, or 35 °C or more 59 °C or less.

According to another embodiment of the present invention, there is provided a biodegradable film comprising a biodegradable composition that includes polybutylene adipate terephthalate and thermoplastic starch, wherein a non-recovery area according to formula 1 of the biodegradable composition is 1,000 to 10,000.

The non-recovery area is as described above in the biodegradable composition according to one embodiment. Furthermore, the biodegradable film may further include polybutylene adipate terephthalate with maleic acid ester-bonded to the terminal hydroxyl group, as described in the biodegradable composition according to one embodiment. Additionally, the content, molecular weight, and structure of maleic acid in the polybutylene adipate terephthalate, the thermoplastic starch, and the polybutylene adipate terephthalate with maleic acid ester-bonded to the terminal hydroxyl group are as

described above.

For example, the polybutylene adipate terephthalate can be included in an amount of 30 to 80% by weight, based on 100% by weight of the total biodegradable film, and more specifically, it may be included in an amount of 30% by weight or more, 35% by weight or more, 40% by weight or more, and 80% by weight or less, 75% by weight or less, 70% by weight or less.

Moreover, the biodegradable film includes polybutylene adipate terephthalate with maleic acid ester-bonded to the terminal hydroxyl group in an amount of 1.5 weight% or more 15.0 weight% or less relative to the total 100 weight% of the polybutylene adipate terephthalate and thermoplastic starch.

Furthermore, the biodegradable film may include 0.5% by weight or more 10.0% by weight or less of polybutylene adipate terephthalate with maleic acid ester-bonded to the terminal hydroxyl group, based on 100% by weight of the total biodegradable film. For instance, based on 100% by weight of the total solids of the biodegradable composition, the polybutylene adipate terephthalate with maleic acid ester-bonded to the terminal hydroxyl group may be included in an amount of 1.0% by weight or more, 1.3% by weight or more, 1.5% by weight or more, 1.8% by weight or more, 1.9% by weight or more, 2.0% by weight or more, and 9.0% by weight or less, 7.0% by weight or less, 6.0% by weight or less, 5.0% by weight or less.

Additionally, the biodegradable film may include 10% by weight or more 50% by weight or less of thermoplastic starch, based on 100% by weight of the total biodegradable film. For example, based on 100% by weight of the total solids of the biodegradable composition, the thermoplastic starch may be included in an amount of 10% by weight or more, 15% by weight or more, 20% by weight or more, 25% by weight or more, and 45% by weight or less, 40% by weight or less, 35% by weight or less.

The method of manufacturing the biodegradable film is not particularly limited, but it can be obtained by using the biodegradable composition according to one embodiment and applying conventional film manufacturing methods such as inflation method, tubular method, or T-die casting method. For example, the composition can be pelletized, and the pellets can be dried at 60 to 100 °C for more than 6 hours to control the moisture content to 1,200 ppm or less, 500 ppm or less, or 200 ppm or less. Subsequently, the pelletized composite can be applied to a release film, and then placed in a heat press to apply pressure and produce the film. At this time, the temperature may be 130 °C to 250 °C, 150 °C to 220 °C, or 160 °C to 200 °C, and the pressure may be 5 MPa to 20 MPa, 8 MPa to 17 MPa, or 10 MPa to 15 MPa.

The thickness of the biodegradable film may be 10 to 300 μm, and more specifically, it may be 10 μm or more, 13 μm or more, 15 μm or more, 20 μm or more, 25 μm or more, and 300 μm or less, 200 μm or less, 150 μm or less, 100 μm or less, 80 μm or less, 50 μm or less. Due to the thickness of the film being within the aforementioned range, it can exhibit strong elasticity, excellent handling properties, and improved winding and unwinding conditions of the roll.

If the film thickness is excessively thin, the tensile strength, tear strength, and elongation may deteriorate, causing holes or tears during use. Conversely, if the film thickness is excessively thick, cost competitiveness may decrease. Additionally, the biodegradable film can be used for agricultural mulching films, disposable gloves, medical packaging, food packaging, garbage bags, or various industrial product bags.

The biodegradable film according to one embodiment may have a tensile strength of 5 MPa or more, 7 MPa or more, 8 MPa or more, or 5 MPa to 30 MPa, as measured according to ASTM D882.

Moreover, the biodegradable film may have an elongation at break of 300% or more, 350% or more, 400% or more, 420% or more, 430% or more, or 300% to 700%, as measured according to ASTM D882.

Furthermore, the biodegradable film may have a tear strength of 200 gf or more, 220 gf or more, 240 gf or more, 260 gf or more, 280 gf or more, 285 gf or more, as measured according to ASTM 1922.

The maximum tensile strength, elongation at break, and tear strength of the biodegradable film can satisfy the aforementioned numerical ranges for both the MD (Machine Direction) and TD (Transverse Direction) directions.

## ADVANTAGEOUS EFFECTS

According to the present invention, a biodegradable composition with excellent biodegradability, compatibility, and thermal diffusivity is provided. This composition can be used to produce a biodegradable film that exhibits superior mechanical properties such as biodegradability and tensile strength, and has an increased content of bio-based materials.

## DETAILED DESCRIPTION OF THE EMBODIMENTS

The invention will be described in more detail with reference to the following examples. However, these examples are merely illustrative of the invention and are not intended to limit the scope of the invention.

### Preparation Example 1: Preparation of Thermoplastic Starch

Corn starch 700 g and glycerol 300 g were mixed using a mixer based on dry weight and then compounded by

feeding into an extruder. The extruder was set at a temperature of 120 °C and a screw speed of 150 rpm. The extruded strand was cut using a pelletizer to produce thermoplastic starch pellets.

**Preparation Example 2: Preparation of Polybutylene Adipate Terephthalate with maleic acid ester-bonded to the terminal hydroxyl group**

Polybutylene adipate terephthalate (PBAT, Solpol 1000N, SOLTECH Co., Ltd.) 100 g and maleic anhydride 5 g were mixed in an internal mixer at a temperature of 160 °C and a speed of 50 rpm for 10 minutes to react and produce polybutylene adipate terephthalate with maleic acid ester-bonded to the terminal hydroxyl group with a weight-average molecular weight of 120,000.

**<Examples and Comparative Examples>**

**Example 1**

A composition was prepared by hand mixing polybutylene adipate terephthalate (PBAT, Solpol 1000N, SOLTECH Co., Ltd.) 750 g, the thermoplastic starch prepared in Preparation Example 1 250 g, and the polybutylene adipate terephthalate with maleic acid ester-bonded to the terminal hydroxyl group prepared in Preparation Example 2 20 g based on dry weight.

The mixture was then compounded by feeding into an extruder, which was set at a temperature range of 150 °C and a screw speed of 200 rpm. The extruded strand was cut using a pelletizer to produce composite pellets.

**Example 2**

A composition and pellets were prepared in the same manner as in Example 1, except that 30 g of polybutylene adipate terephthalate with maleic acid ester-bonded to the terminal hydroxyl group was used instead of 20 g of polybutylene adipate terephthalate with maleic acid ester-bonded to the terminal hydroxyl group.

**Example 3**

A composition and pellets were prepared in the same manner as in Example 1, except that 40 g of polybutylene adipate terephthalate with maleic acid ester-bonded to the terminal hydroxyl group was used instead of 20 g of polybutylene adipate terephthalate with maleic acid ester-bonded to the terminal hydroxyl group.

**Example 4**

A composition and pellets were prepared in the same manner as in Example 1, except that 50 g of polybutylene adipate terephthalate with maleic acid ester-bonded to the terminal hydroxyl group was used instead of 20 g of polybutylene adipate terephthalate with maleic acid ester-bonded to the terminal hydroxyl group.

**Example 5**

A composition and pellets were prepared in the same manner as in Example 1, except that 110 g of polybutylene adipate terephthalate with maleic acid ester-bonded to the terminal hydroxyl group was used instead of 20 g of polybutylene adipate terephthalate with maleic acid ester-bonded to the terminal hydroxyl group.

**Comparative Example 1**

A composition and pellets were prepared in the same manner as in Example 1, except that 10 g of polybutylene adipate terephthalate with maleic acid ester-bonded to the terminal hydroxyl group was used instead of 20 g of polybutylene adipate terephthalate with maleic acid ester-bonded to the terminal hydroxyl group.

**Comparative Example 2**

A composition and pellets were prepared in the same manner as in Example 1, except the polybutylene adipate terephthalate with maleic acid ester-bonded to the terminal hydroxyl group was not used.

**Evaluation**

### 1. Compatibility (Non-recoverable Area) Evaluation

The compatibility of the compositions from the examples and comparative examples was evaluated by measuring the specific surface area of the compositions. Specifically, the compositions were melted on a parallel plate geometry with a diameter of 25 mm on a DHR (Discovery Hybrid Rheometer) from TA Instruments and then pressed to a gap of 1 mm for loading. The storage modulus was measured while increasing the strain from 0.01% to 75% and then decreasing it back to 0.01% at 150 °C and a frequency of 1 Hz. The non-recoverable area is the difference between the area of the storage modulus from 0.01% to 75% strain and the area of the storage modulus from 75% to 0.01% strain

The area under the storage modulus curve refers to the area beneath the line graph with strain on the x-axis and storage modulus on the y-axis. In addition, the non-recovery area is a factor in the degree to which the composition recovers when the strain is increased and then decreased again. A smaller non-recoverable area indicates better distribution of the dispersed phase in the continuous phase, resulting in superior compatibility.

### 2. Tensile Properties and Tear Resistance Evaluation

The pellets from the examples and comparative examples were used to produce films with a thickness of 15 μm at 150°C using a Film Blown Unit (BL50T) from Collin. The films were evaluated for tensile strength and elongation at break according to ASTM D882, and tear resistance according to ASTM D1922. The tensile strength, elongation at break, and tear resistance in the machine direction (MD) were evaluated, and the results are shown in Table 1 below.

[Table 1]

| | Compatibility (Non-recoverable Area) | Tensile strength (MPa) | Elongation at break (%) | Tear resistance (gf) |
|---|---|---|---|---|
| Example 1 | 8083 | 14 | 363 | 287 |
| Example 2 | 6925 | 15 | 376 | 294 |
| Example 3 | 4849 | 20 | 527 | 294 |
| Example 4 | 4479 | 22 | 581 | 298 |
| Example 5 | 3619 | 25 | 631 | 300 |
| Comparative Example 1 | 12742 | 13 | 330 | 280 |
| Comparative Example 2 | 20847 | Unmeasurable | Unmeasurable | Unmeasurable |

According to Table 1, it was confirmed that Examples 1 to 5, which satisfy a non-recovery area of 1,000 to 10,000, exhibit superior commercial viability compared to Comparative Example 1, and also demonstrate excellent mechanical properties such as tensile strength and elongation at break. It was also noted that Comparative Example 2, which does not use "polybutylene adipate terephthalate with maleic acid ester-bonded to the terminal hydroxyl group," shows poor miscibility between the hydrophobic polybutylene adipate terephthalate and the hydrophilic thermoplastic starch, making it difficult to measure overall properties.

## Claims

**1.** A biodegradable composition comprising polybutylene adipate terephthalate and thermoplastic starch, where a non-recoverable area according to Formula 1 of the biodegradable composition is 1,000 Pa·log% or more 10,000 Pa·log% or less:

[Formula 1]

$$\text{Non-recoverable area} = A - B$$

in Formula 1,

A is the area of the storage modulus measured after increasing the strain on the biodegradable composition from

0.01% to 75% at a temperature of 150 °C and a frequency of 1 Hz, and
B is the area of the storage modulus measured after reducing the strain on the biodegradable composition back to 0.01%.

**2.** The biodegradable composition of claim 1,
wherein the biodegradable composition further includes polybutylene adipate terephthalate with maleic acid ester-bonded to the terminal hydroxyl group.

**3.** The biodegradable composition of claim 1,

wherein the polybutylene adipate terephthalate with maleic acid ester-bonded to the terminal hydroxyl group is represented by Chemical Formula 1 or 2:

[chemical formula 1]

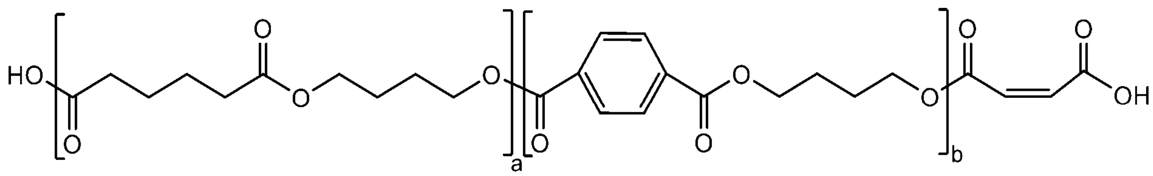

[chemical formula 2]

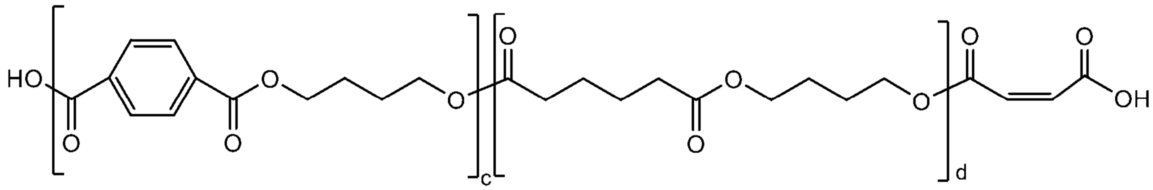

In the above chemical formulas 1 and 2,
a to d are each independently an integer from 1 to 500.

**4.** The biodegradable composition of claim 1,
wherein the biodegradable composition includes the polybutylene adipate terephthalate with maleic acid ester-bonded to the terminal hydroxyl group in an amount of 1.5 weight% or more 15.0 weight% or less relative to the total 100 weight% of the polybutylene adipate terephthalate and thermoplastic starch.

**5.** The biodegradable composition of claim 1,
wherein the thermoplastic starch comprises one or more selected from the group consisting of rice starch, wheat starch, corn starch, sweet potato starch, potato starch, tapioca starch, cassava starch, and their modified starches.

**6.** The biodegradable composition of claim 1,
wherein the biodegradable composition includes the thermoplastic starch in an amount of 10 weight% or more 50 weight% or less relative to the total 100 weight% of solid content of the biodegradable composition.

**7.** A biodegradable film includes a biodegradable composition comprising polybutylene adipate terephthalate and thermoplastic starch,
where a non-recovery area according to formula 1 of the biodegradable composition is 1,000 Pa·log% or more 10,000 Pa·log% or less.

[Formula 1]

$$\text{Non-recovery area} = A - B$$

in formula 1,

A is the area of the storage modulus measured after increasing the strain on the biodegradable composition from 0.01% to 75% at a temperature of 150 °C and a frequency of 1 Hz, and
B is the area of the storage modulus measured after reducing the strain on the biodegradable composition back to 0.01%.

**8.** The biodegradable film of claim 7,
wherein the biodegradable film further includes polybutylene adipate terephthalate with maleic acid ester-bonded to the terminal hydroxyl group.

**9.** The biodegradable film of claim 7,
wherein the biodegradable film includes polybutylene adipate terephthalate with maleic acid ester-bonded to the terminal hydroxyl group in an amount of 1.5 weight% or more 15.0 weight% or less relative to the total 100 weight% of the polybutylene adipate terephthalate and thermoplastic starch.

**10.** The biodegradable film of claim 7,
wherein the biodegradable film includes the thermoplastic starch in an amount of 10 weight% or more 50 weight% or less relative to the total 100 weight% of the biodegradable film.

**11.** The biodegradable film of claim 7,
wherein the biodegradable film has a tensile strength of 5 MPa or more as measured according to ASTM D882.

**12.** The biodegradable film of claim 7,
wherein the biodegradable film has an elongation at break of 300% or more as measured according to ASTM D882.

**13.** The biodegradable film of claim 7,
wherein the biodegradable film has a tear strength of 200 gf or more as measured according to ASTM 1922.

## INTERNATIONAL SEARCH REPORT

International application No.
**PCT/KR2024/019935**

**A. CLASSIFICATION OF SUBJECT MATTER**

**C08L 67/02**(2006.01)i; **C08L 3/02**(2006.01)i; **C08G 63/91**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08L 67/02(2006.01); A01G 13/02(2006.01); C08J 3/20(2006.01); C08L 3/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 생분해성 조성물 (biodegradable composition), 폴리부틸렌 아디페이트 테레프탈레이트 (polybutylene adipate terephthalate), 열가소성 전분 (thermoplastic starch), 말레산 (maleic acid)

**C. DOCUMENTS CONSIDERED TO BE RELEVANT**

| Category* | Citation of document, with indication, where appropriate, of the relevant passages | Relevant to claim No. |
|---|---|---|
| X | FOURATI, Y. et al. PBAT/thermoplastic starch blends: Effect of compatibilizers on the rheological, mechanical and morphological properties. Carbohydrate Polymers. 2018, vol. 199, pp. 51-57. See pages 52 and 53; figure 1; and table 1. | 1-13 |
| X | WO 2023-279206 A1 (CTK RESEARCH AND DEVELOPMENT CANADA LTD.) 12 January 2023 (2023-01-12) See claims 1-5; pages 5, 7-9, 12-14, 17-18 and 22; examples 2, 3 and 4; and tables 2, 3 and 4. | 1-13 |
| A | KR 10-2017-0075052 A (LOTTE FINE CHEMICAL CO., LTD.) 03 July 2017 (2017-07-03) See claims 1-4. | 1-13 |
| A | KIM, S. K. et al. In situ reactive compatibilization of thermoplastic starch/poly(butylene adipate-co-terephthalate) blends with robust water resistance performance. ACS Applied Polymer Materials. 26 June 2023, vol. 5, pp. 5445-5453. See abstract; and page 5446. | 1-13 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 March 2025** | **12 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/019935

C. DOCUMENTS CONSIDERED TO BE RELEVANT

| Category* | Citation of document, with indication, where appropriate, of the relevant passages | Relevant to claim No. |
|---|---|---|
| A | LACKNER, M. et al. Mechanical properties and structure of mixtures of poly(butylene-adipate-co-terephthalate) (PBAT) with thermoplastic starch (TPS). International Journal of Biobased Plastics. 2021, vol. 3, no. 1, pp. 126-138. See abstract; and page 128. | 1-13 |

Form PCT/ISA/210 (second sheet) (July 2022)

**INTERNATIONAL SEARCH REPORT**
**Information on patent family members**

International application No.
**PCT/KR2024/019935**

| Patent document cited in search report | Publication date (day/month/year) | Patent family member(s) | Publication date (day/month/year) |
|---|---|---|---|
| WO 2023-279206 A1 | 12 January 2023 | CA 3223644 A1 | 12 January 2023 |
| | | CN 117897450 A | 16 April 2024 |
| | | EP 4367183 A1 | 15 May 2024 |
| | | JP 2024-527373 A | 24 July 2024 |
| | | KR 10-2024-0037995 A | 22 March 2024 |
| | | WO 2023-279206 A8 | 02 November 2023 |
| | | WO 2023-279206 A9 | 20 April 2023 |
| KR 10-2017-0075052 A | 03 July 2017 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230177651
- KR 1020240179460